# EUROPEAN PATENT SPECIFICATION

(11) **EP 2 342 069 B1**
(45) Date of publication and mention of the grant of the patent: **26.02.2014**
(21) Application number: 08824489.2
(22) Date of filing: 03.10.2008
(51) Int. Cl.: B29D 30/06, B60C 11/12

(54) **Molded tire tread with an undulated sipe**
Geformte Reifenlauffläche mit gewellter Lamelle
Bande de roulement de pneumatique avec incision ondulée

(43) Date of publication of application: 13.07.2011
(73) Proprietor: Compagnie Générale des Etablissements Michelin, 63000 Clermont-Ferrand (FR); MICHELIN Recherche et Technique S.A., 1763 Granges-Paccot (CH)
(72) Inventor: CHRISTENBURY, Damon, L., Fountain Inn SC 29644 (US)
(74) Representative: Dossmann, Gérard
(86) International application number: PCT/US2008/078717
(87) International publication number: WO 2010/039148

(56) References cited:
- EP-A- 0 378 090
- EP-A- 0 450 251
- EP-A- 0 543 267
- EP-A- 1 533 141
- EP-A- 1 782 970
- JP-A- 7 001 918
- JP-A- 2000 102 925
- JP-A- 2001 315 508
- US-A1- 2007 295 434
- US-A1- 2007 295 435
- US-B1- 6 408 910

## Description

### BACKGROUND OF THE INVENTION

### Field of the Invention

This invention relates generally to tire treads and molds, and, more specifically, to molded tire treads according to the preamble of claim 1 such as they are for example known from EP-0-543 267 A.

### Description of the Related Art

It is commonly known to for tire treads to contain various tread elements and features to enhance tire performance. It is also commonly known that these elements and features may be formed within a mold during a curing process. Treads may be formed and cured independently, such as for retreading, or concurrently with an attached tire carcass.

Grooves and sipes are two common tread features that are formed within a tread. Grooves are troughs formed within the tread to form tread elements, such as ribs and blocks. Sipes are very thin extensions that generally extend within the tread elements. Grooves provide void within the tread for the consumption of water and other substances encountered by the tire. Grooves also provide surface edges to improve tire traction. Sipes also provide traction edges, while further reducing tread element stiffness. Sipes, however, achieve their purposes generally without materially increasing the tread void. This is because sipes are very thin extensions, which, for conventional straight sipes, are typically 0.2-0.6 millimeters (mm) thick; however, sipes can measure upwards of 1.0-1.2 mm thick. It is desirous, however, to provide sipes that are as thin as possible to minimize the formation and existence of void.

Progressive sipes generally provide an upper sipe portion extending from an outer surface of the tread to a particular depth within the tread, after which a pair of lower sipe projections (or legs) extend downwardly into the tread from the first portion. At least one of the lower projections also extends outwardly from the other while extending into the tread depth. Generally, progressive sipes appear in cross-section as an inverted "Y", such as is generally shown in U.S. Pat. No. 4,994,126. When molding a tire tread, a mold form or member is used to create a progressive sipe in such tread, where such mold member provides the cross-sectional shape of the sipe to be created. Because progressive sipes have outwardly extending projections, progressive sipe mold members contain similar projections. Accordingly, corresponding mold members generally experience elevated loads during molding and demolding operations due to the existence of the lower projections. During such operations, sipe members are forced into the tread during mold closure and out of the tread during mold opening. Accordingly, a progressive sipe mold member must be durable enough to withstand the loadings observed during molding and demolding operations, as well as for repeated use for multiple curing cycles.

Further examples of progressive sipes in tire treads are disclosed in US 2007/0295434 A1 and EP 0 378 090 A1.

One approach for providing a more durable progressive sipe mold member is to increase the thickness of each portion of the form corresponding to the various portions and projections of the sipe member. This, however, results in thicker sipes, which may not be optimum for tire performance. Accordingly, there is a need for a more durable progressive sipe mold member, which provides sufficiently thin sipes in a tire tread.

### SUMMARY OF THE INVENTION

A solution for achieving the above-mentioned objectives is disclosed in independent claim 1. The dependent claims relate to advantageous embodiments.

The foregoing and other objects, features and advantages of the invention will be apparent from the following more detailed descriptions of particular embodiments of the invention, as illustrated in the accompanying drawing wherein like reference numbers represent like parts of the invention.

### BRIEF DESCRIPTION OF THE DRAWINGS

FIG. **1** is a perspective view of an undulating sipe mold member, in accordance with an embodiment of the present invention.
FIG. **2** is a top view of the mold member of FIG. **1****.**
FIG. **3A** is an end view of the mold member of FIG. **1** showing forces acting on such member during the closing of a mold prior to a curing cycle, according to an embodiment of the invention.
FIG. **3B** is an end view of the mold member of FIG. **1** showing forces acting on such member during the opening of a mold subsequent a curing cycle, according to an embodiment of the invention.
FIG. **4** is a top view of a non-symmetrically undulating sipe mold member, in accordance with an alternative embodiment of the invention.
FIG. **5** is a top view of an undulating sipe mold member extending in a stepped path, in accordance with an alternative embodiment of the invention.
FIG. **6** is a top view of an undulating sipe mold member extending along an arcuate sweep axis, in accordance with an alternative embodiment of the invention.
FIG. **7** is a perspective view of a tread having a plurality of undulating sipes, in accordance with an embodiment of the present invention.
FIG. **8A** is a sectional view of an undulating sipe contained within the tread of FIG. **4****,** in accordance with an embodiment of the invention.
FIG. **8B** is a cross-sectional view of an alternative undulating sipe, in accordance with an alternative embodiment of the invention shown in FIG. **7A.**
FIG. **8C** is a cross-sectional view of an alternative undulating sipe, in accordance with an alternative embodiment of the invention shown in FIG. **7A.**
FIG. **8D** is a cross-sectional view of an alternative undulating sipe, in accordance with an alternative embodiment of the invention shown in FIG. **7A.**

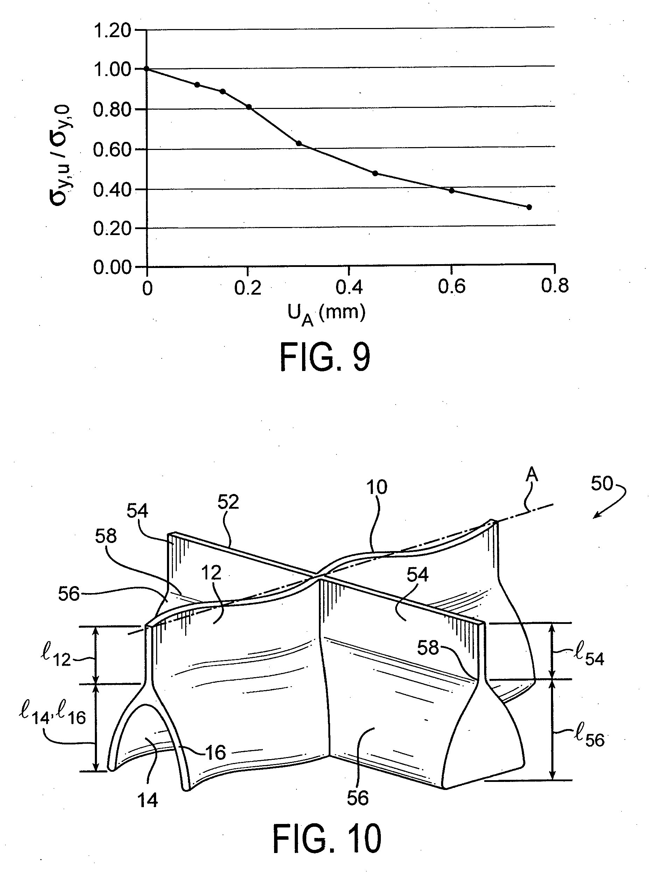

FIG. **9** is a graph showing the relative improvement (reduction) in maximum yield stress (*i.e*., Von Mises stress) σ**_{y,u}**/σ**_{y,o}** provided by an undulating mold member **10,** for different amplitudes **U_{A}** of a sinusoidal path **P.** More specifically, the graph displays maximum relative stress reductions by comparing the stress σ**_{y,o}** of a non-undulated mold member to the stress σ**_{y,u}** of an undulating mold member **10,** the cross-sectional shape and dimensions of each mold member being substantially the same. As generally shown, as the amplitude **U_{A}** of the waveform increases, the reduction in stress also increases, in accordance with an embodiment of the present invention.
FIG. **10** is a perspective view of a mold member comprising a progressive sipe mold member and a second sipe mold member, according to an alternative embodiment of the present invention.

### DETAILED DESCRIPTION OF PARTICULAR EMBODIMENTS

Particular embodiments of the present invention provide treads containing an undulating progressive tread sipe.

A progressive sipe is a sipe that generally includes a pair of projections extending downwardly from an upper sipe portion positioned along a tread contact surface, at least one of the projections extending outwardly from the upper sipe portion. The tread contact surface is generally the portion of the tread extending about the outer circumference of a tire between the side edges of the tread. At least one of the pair of projections also extends outwardly or away from the other projection as each extends downwardly with increasing tread depth. In particular embodiments, the lower projections extend from an upper sipe portion having a length, the upper sipe portion extending downwardly from the contact surface of the tread to a particular depth within the tread. Lower projections may extend from a bottom end of upper sipe portion, or from any other location along the length of upper sipe portion. To form progressive sipes within a tread, a corresponding mold member is positioned within the mold to form a relief. A progressive sipe mold member includes a corresponding member for each sipe extension. Generally, the sipe mold member forms a sipe having substantially the same cross-sectional shape, except that the mold member corresponding to upper sipe portion may extend further to form a means for attaching mold member into a mold.

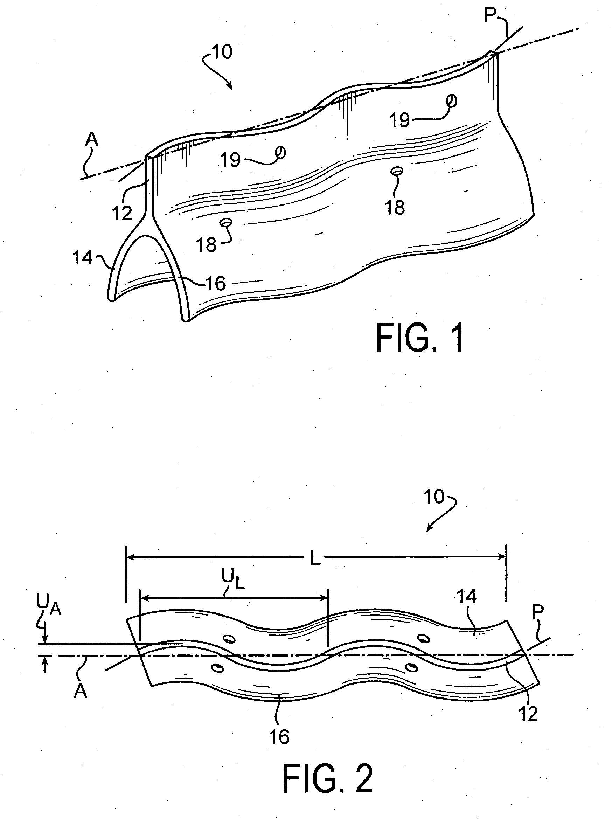

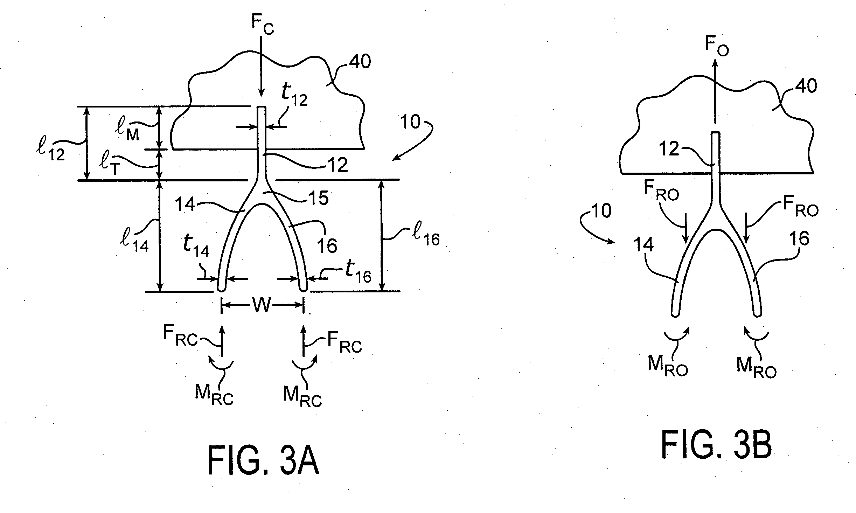

Progressive sipe mold member **10,** shown in a particular embodiment in FIG. **1****,** includes an initial or upper sipe member **12,** and a pair of first and second lower projection members **14** and **16** extending from upper member **12.** As generally shown in FIG. **3A****,** lower members **14, 16** each have a corresponding length 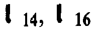 and extend outwardly to a width **W.** In the embodiments shown, upper sipe member **12** has a length 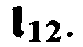 With reference to FIG. **3A****,** length 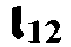 of upper sipe member **12** is equal to the sum of distance 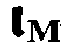 and 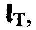 where distance 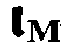 represents a distance by which upper sipe member **12** is inserted into a mold **40** and distance 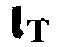 represents the distance by which upper sipe member **12** is inserted into tread **20.** Distances 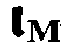 and 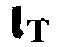 may be any desired value. For example, upper sipe member **12** may not extend into the tread, and, therefore, distances 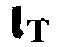 would equal zero. In other words, upper sipe member **12** simply comprises the joint **15** between lower members **14, 16,** such that upper sipe member **12** does not substantially extend upwardly beyond such joint **15.** In the embodiments shown, each of the lower members **14, 16** extend from upper member **12** at a common instance, namely, at joint **15,** at the bottom end of upper member **12.** In other embodiments, however, it is contemplated that each of the lower extension members **14, 16** may extend independently from upper member **12,** from the same or different position along length 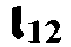 of upper member **12.**

Conventional sipes, in comparison to progressive sipes, do not include a pair of lower projections. Accordingly, mold members for forming conventional sipes do not have lower extending members **14, 16,** and instead generally comprise an elongated upper member **12.** Accordingly, significantly less resistive forces are exerted on conventional sipe members during molding and demolding operations, since resistive forces are only exerted upon the very thin bottom end surface of the slit-like member, and any side surfaces that may exist when a conventional sipe member extends downwardly in a wavy (*i.e*., non-linear) path.

It follows that during molding and demolding operations, progressive sipe mold members **10** are exposed to substantially higher forces than those associated with conventional sipes. Because lower members **14, 16** extend outwardly, progressive sipe mold member **10** provides significantly more lateral surface area than a conventional sipe mold member against which a tread will apply forces and moments to resist mold member entry or extraction from such tread during mold closing and opening operations, respectively. Accordingly, significantly more force is applied against progressive mold member **10,** as compared to a conventional sipe mold member.

For example, with reference to FIG. **3A****,** an exemplary embodiment of a progressive sipe mold member **10** is shown in cross-section during a mold closing operation. When a mold **40** is closed, such as prior to molding and/or curing of the tread, the sipe member **10** is forced by closing force **F_{C}** into tread material positioned within the mold. Accordingly, the tread material resists entry of the sipe member **10,** which imparts resistive forces **F_{RC}** on the lower extensions **14** and **16** of mold member **10.** Further, each of the lower extension members **14, 16** is subjected to a moment **M_{RC},** which arises by virtue of each such lower member **14, 16** being cantilevered from upper member **12.** Similarly, as shown exemplarily in FIG. **3B****,** the tread exerts resistive forces **F_{RO}** and moments **M_{RO}** against the lower members **14, 16** as the tread attempts to prevent the extraction of member **10** during a mold opening operation,

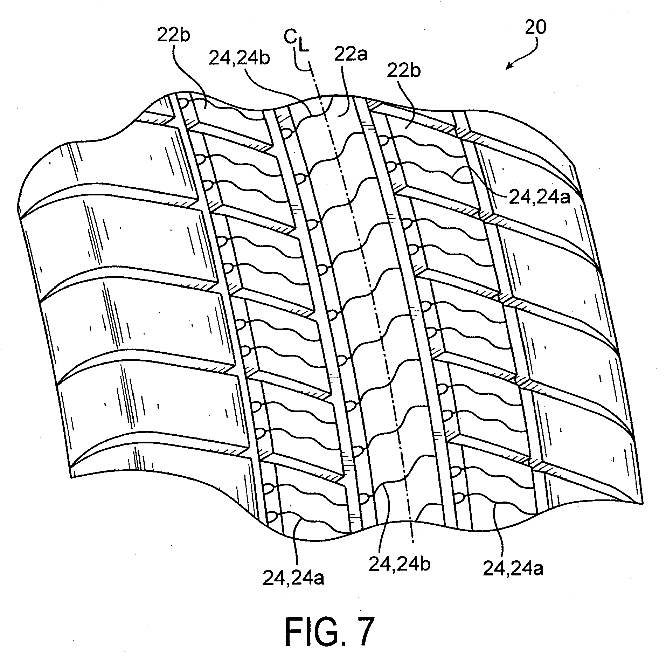

As exemplarily shown in FIGS. **1** and **2****,** to overcome the additional forces and stresses experienced by a progressive sipe mold member **10,** such member **10** is strengthened by undulating the member **10** along its length **L,** relative to a sweep axis **A** extending in a generally lengthwise direction of member **10.** In other words, sipe mold member **10,** and any corresponding sipe **24** formed from member **10** (such as is shown, for example, in FIGS. **7-8D****),** alternates between opposing sides of a sweep axis **A** in any desired manner for a length **L** of the corresponding member **10** or sipe **24.** Accordingly, member **10** extends along a path **P,** which extends along sweep axis **A** in an undulating or non-linear manner. With reference to FIG. **2****,** each undulation segment **S** extends along sweep axis **A** by a distance equal to one-half (½) the length **U_{L}.**

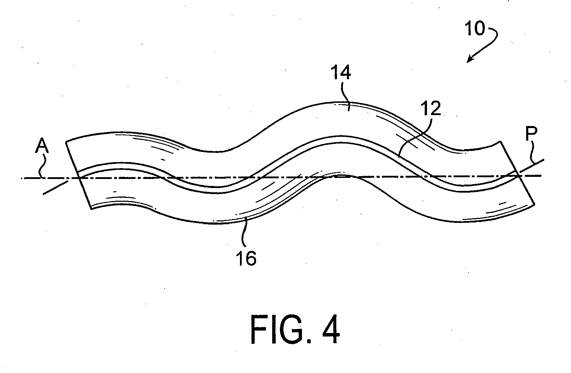

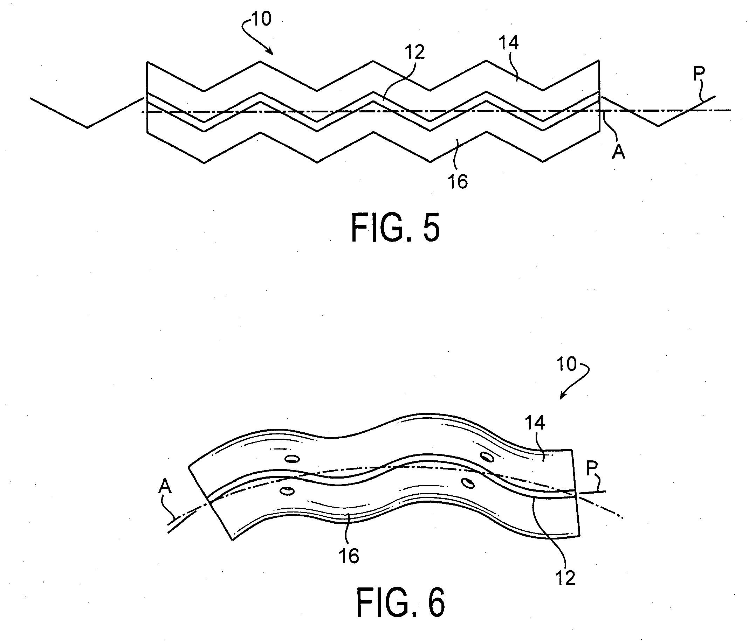

As shown in FIGS. **1** and **2****,** in particular embodiments, an undulating path **P** may be symmetrical about axis **A.** As shown in FIG. **4****,** however, it is contemplated that member **10** may extend along an undulating path **P** that is not symmetrical (*i.e*., asymmetrical) relative to sweep axis **A.** It is contemplated that undulating path **P** may extend as a smooth waveform or a contoured path, such is exemplarily shown in FIGS. **1, 2****,** and **4****.** For example, a waveform may comprise a sinusoidal wave having a periodic length that is equal to length **U_{L},** and an amplitude equal to distance **U_{A}.** In other embodiments, undulating path **P** may extend in a stepped (*i.e*., jagged) path, which may be formed of linear or non-linear step undulation segments S. A linearly-stepped path **P** is exemplarily shown in FIG. **5****.** It is contemplated that an undulating path **P** may only exist or extend along a portion of a sipe mold member **10,** and/or may be combined with differently undulating portions of sipe mold member **10.** For example, a sipe member **10** may include intervals of contoured and stepped undulations. Further, the extension of path **P** may extend along length **L** in a consistent or uniform manner, as shown in FIGS. **1-2****,** or in an intermittent, variable, non-repeating, or arbitrary manner, meaning that the path **P** may undulate inconsistently or intermittently along path **P.**

Sweep axis **A** generally extends along a length **L** of a sipe member **10** or corresponding sipe **24.** As generally shown in FIGS. **1-5****,** sweep axis **A** may be linear. In other embodiments, however, sweep axis **A** may extend in a non-linear direction, such as is shown in one embodiment in FIG. **6****.**

By providing undulating lower members **14, 16,** each is better able to (*i.e.,* more efficiently able to) withstand the forces exerted thereupon when mold member **10** is forced in and out of a tread during the molding process. Accordingly, it is contemplated that lower members **14, 16** may undulate while upper member **12** does not undulate. It is also contemplated that members **12, 14, 16** may undulate differently and independently, or together in any combination. Members **12, 14, 16** are shown in particular embodiments to undulate together in FIGS. **1, 2****,** and **4****.**

In one embodiment, a sinusoidal path **P** has a periodic length **U_{L}** of 10 mm and an amplitude **U_{A}** of 0.3 mm, 0.4 mm, or 0.6 mm. In other embodiments, the amplitude **U_{A}** is 0.3-0.6 mm, 0.4-0.6 mm. In still other embodiments, the amplitude **U_{A}** is at least 0.3 mm, at least 0.4 mm, or at least 3% of the periodic length **U_{L}.** According to a study, when the sinusoidal path **P** of a mold member **10** has a periodic length **U_{L}** of 10 mm and an amplitude **U_{A}** of 0.6 mm, it has been estimated that the maximum yield stress (*i.e.*, Von Mises stress) was reduced by a factor of 2.5 when compared to the maximum yield stress of a non-undulating mold member having the substantially the same cross-sectional shape and dimensions. However, when reducing the amplitude **U_{A}** from 0.6 mm to 0.4 mm, the maximum yield stress was reduced by a factor 2.

In FIG. **9****,** a graph more generally shows the relative improvement (reduction) in maximum yield stress (*i.e*., Von Mises stress) provided by an undulating mold member **10,** for different amplitudes **U_{A}** of a sinusoidal path **P.** More specifically, the graph displays maximum relative stress reductions by comparing the stress of a non-undulated mold member to an undulating mold member **10,** the cross-sectional shape and dimensions of each mold member being substantially the same. In the graph, the comparison of maximum yield stresses is represented by relative maximum yield stress σ**_{y,u}**/σ**_{y,o}**, which is equal to the maximum yield stress σ**_{y,u}** of an undulating sipe mold member **10** divided by the maximum yield stress σ**_{y,u}** of a non-undulating sipe mold member. As generally shown in FIG. **9****,** the reduction in stress increases as the amplitude **U_{A}** of the waveform increases.

By achieving increased strength and durability by reducing the stresses through undulations, the thickness **t₁₂, t₁₄,** and **t₁₆** of respective undulating members **12, 14, 16** may be reduced to improve the performance of a resulting sipe in a tire tread, as well as the corresponding tire tread. With reference to the embodiment of FIGS. **3A** and **3B****,** thicknesses **t₁₂, t₁₄,** and **t₁₆** are shown. Such thicknesses may vary along the length **L** of member **10,** and may vary between each other. In particular embodiments, any thickness **t₁₂, t₁₄,** and **t₁₆** may be 0.4 mm or lower, and in other embodiments, 0.3 mm or lower, 0.2 mm or lower, and 0.1 mm or lower. In particular embodiments, any thickness **t₁₂, t₁₄,** and **t₁₆** may be 0.05-0.4 mm, and in other embodiments, 0.05-0.3 mm or 0.05-0.2 mm. Further, with regard to width **W,** may extend any distance. In particular embodiments, width **W** is approximately equal to 3-8 mm, and in more specific embodiments, 5-6 mm.

To facilitate attachment of progressive mold member **10** into a mold, member **10** may include one or more attachment means. In particular embodiments, as exemplarily shown in FIG. **1****,** the upper portion of upper member **12** is an attachment means, as such may be inserted into the mold for securement, such as by welding. Further, an attachment means may also comprise one or more apertures **19** positioned along upper member **12** to facilitate the securement of aluminum or other metal about a portion of upper member **12** for welding member **10** within an aluminum mold. Any other attachment means known in the art may be used in addition to, or in lieu of, upper member **12** and/or apertures **19.** Further, vents **18** may be included within any bottom member **14, 16** to facilitate the venting of air or rubber through a corresponding member **14, 16.**

Undulated sipe mold members **10** are utilized to form corresponding progressive sipes **24** in a tire tread. With reference to FIG. **7****,** a representative tread **20** is shown having undulating progressive sipes **24** formed by similarly-shaped mold members **10.** In the embodiment shown, progressive sipes **24** are formed within tread elements **22,** which may comprise a rib **22a** or a block **22b.** Undulated sipes **24** may be used and oriented within a tread **20** in any manner desired to achieve a desired tread pattern. Accordingly, each sipe **24** may extend along its sweep axis **A** in any direction along a tread element **22,** where such sweep axis **A** is linear or non-linear. In FIG. **7****,** for example, sipes **24** are provided along a tread in a particular embodiment, where sipes **24a** extend along blocks **22b** and sipes **24b** extend along ribs **22a.** More specifically, sipes **24a** are shown to extend laterally along tread **20** in a direction approximately normal to the longitudinal centerline **CL** of tread **20,** while sipes **24b** extend laterally at a biased angle relative to the tread longitudinal centerline **CL.** Sipe **24** may also extend circumferentially about a tire, where the length **L** of sipe **24,** or of corresponding mold member **10,** is equal to the length or circumference of the tread. Or, it can also be said that such sipe **24,** or mold member **10,** is continuous. In other embodiments, undulated sipes **24** may extend across a full width (or length) of a corresponding tread element **22,** such as is exemplarily shown in FIG. **7****,** or, in other embodiments, a sipe **24** may extend along any portion less than the full width or length of any tread element **22.**

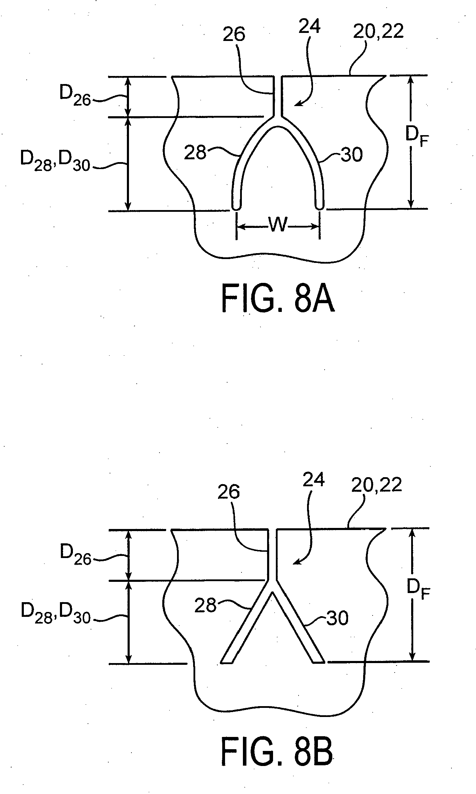

With reference to FIGS. **8A-8D****,** an undulated sipe **24** generally extends to any depth **D_{F}** into the depth of a tire tread. In particular embodiments, such as those shown in such figures, undulated sipe **24** may comprise an upper or initial portion **26,** which corresponds to initial or upper member **12** of mold element **10.** As with upper member **12,** it is contemplated that upper portion **26** may or may not undulate. Undulated sipe **24** also includes first and second lower projections (*i.e*., legs) **28, 30**, each of which correspond to first and second mold members **14, 16**, respectively. In particular embodiments, upper portion **26** extends downwardly from an exterior tread surface to a desired tread depth **D₂₆.** Depth **D₂₆** corresponds to length 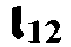 of an associated mold member **10.** While depth **D₂₆** may comprise any distance, it is also contemplated that depth **D₂₆** may be substantially zero, such that joint **15** extends along the tread surface. With regard to lower projections **28, 30,** each such projection extends a depth **D₂₈** and **D₃₀**, respectively, into the tread. Such projections **28, 30** may extend to the same tread depth as shown in the figures, or, in other embodiments, may each extend to different depths within the tread.

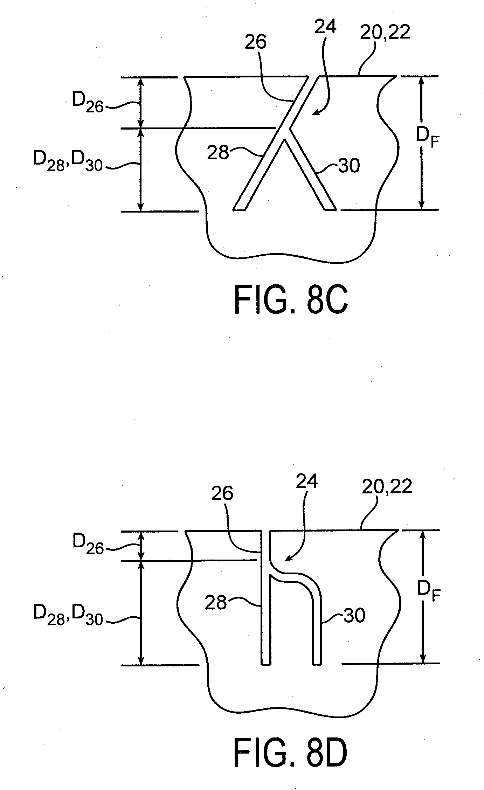

With regard to the cross-sectional shape of progressive undulated sipe **24,** any shape is contemplated. With general reference to the embodiments of FIGS. **8A-8D****,** the cross-sectional shape of a progressive sipe **24** can be generally described as being an inverted "Y" or "h". Still, it is contemplated that any other shape or variation can be used, and, accordingly, is within the scope of this invention. For example, with reference to the embodiment shown in FIG. **8A****,** the cross-section of sipe **24** shown can also be referred to as forming a wishbone shape. Further, lower projections **28, 30** generally form an inverted "U" or "V" shape. It follows that sipe **24** may form a "U" or "V" shape when upper portion does not exist, or when it has a small or negligible length. With reference to the embodiments shown in FIGS. **8B** and **8C****,** the cross-sections of sipe **24** shown can also be referred to as forming lower case and upper case inverted "Y" shapes, respectively. With reference to FIG. **8D****,** the cross-section shown can also be referred to as forming a lower case "h" shape. The cross-sectional shape of sipe **24** maybe symmetrical, as exemplarily shown in FIGS. **8A** and **8B****,** or asymmetrical, as exemplarily shown in FIGS. **8C** and **8D****.** Because undulated sipe **24** is formed by a corresponding mold member **10,** it follows that any variations in shape or design, including the manner or path of undulation, for either sipe **24** or member **10** corresponds to the other. Accordingly, the discussion with regard to mold member **10,** as well as associated members **12, 14, 16,** is incorporated within regard to sipe **24** and its projections **26, 28, 30,** and visa versa. Accordingly, just as sipe mold member **10** has a sweep axis **A,** the corresponding sipe **24** formed by such mold member **10** also extends along the same (has a corresponding) sweep axis **A.**

In operation, upper projection **26** provides an initial sipe incision along the tread surface, which can be seen in FIG. **7****.** After the tire tread has been worn to a particular depth, the upper sipe incision is worn away by a depth **D₂₄** to leave exposed a pair of spaced-apart sipe incisions associated with first and second projections **28, 30.** It is contemplated that, however, sipe mold member **10** may be arranged such that only the first and second lower mold members **14, 16** are contained within tread **20,** which means that only first and second projections **28, 30** would be contained within an unworn tread. In other words, distance 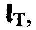 as shown in FIG. **3A****,** would be equal to zero.

With reference to FIG. **10****,** another embodiment of the present invention is shown. It is contemplated that an undulated sipe **24** may intersect any other tread feature, such as another groove or sipe, for example. In FIG. **10****,** a multi-feature mold member **50** is shown. The multi-feature member **50** generally includes an undulated sipe mold member **10** intersecting a second tread feature mold member **52.** Undulating mold member **10** may comprise any embodiment contemplated above, and may intersect second mold member **52** at any angle of incidence. Second mold member **52** may form a groove or sipe, which may extend in any direction along a tread. For example, second mold member **52** extends in any lateral or circumferential direction along a tread. In the particular embodiment shown in FIG. **10****,** second mold member **52** generally includes an upper mold portion **54** and a lower mold portion **56,** the lower portion **56** extending from upper portion **54** at location **58** while also expanding widthwise from the upper mold portion **54** (*i.e.,* the lower portion **56** is wider than the upper mold portion **54**). In the embodiment shown, lower portion **56** forms a single oblong or tear-drop shaped form, which may have an outer shape similar to that formed by the pair of lower projection members **14, 16** of member **10,** or, in other embodiments, lower portion **56** may for any other desired shape. In other embodiments, second mold member **52** may comprise a second undulating mold member **10,** or a conventional sipe, which generally comprises an elongated upper portion **54,** which may extend downwardly any distance, where such downward extension may be linear or non-linear.

As shown in the embodiment of FIG. **10****,** upper mold portion **54** extends a distance 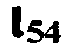 between a top and a bottom of such mold portion **54,** while bottom mold portion **56** extends a distance 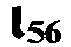 between a top and a bottom of such mold portion **56.** In particular embodiments, upper mold portion distance 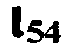 equals at least 2 mm, and the lower wear layer formed by lower mold portion **56** in a tread becomes exposed after distance 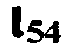 is worn away. In other embodiments, any other desirable distances for distance 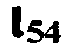 and distance 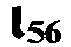 may be used. Further, while lower projections **14, 16** of progressive sipe mold member **10** and lower mold portion **56** of second mold member **52** as shown in FIG. **10** to extend (or initiate) from similar locations along corresponding members **10** and **52** (*i.e*., locations **15** and **58** are similarly positioned along the height of member **50),** in other embodiments, lower projections and lower mold portion **56** may begin to extend (initialize) at different locations along the height of member **50.** Finally, the projections lengths 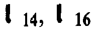 and lower portion length 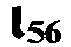 may be the same, as shown in FIG. **10****,** or different, in other embodiments.

While this invention has been described with reference to particular embodiments thereof, it shall be understood that such description is by way of illustration and not by way of limitation. Accordingly, the scope and content of the invention are to be defined only by the terms of the appended claims.

## Claims

1. A molded tire tread (20) comprising:
a plurality of tread elements (22) being separated by one or more grooves;
one or more progressive sipes (24), each sipe having a sweep axis (A) along which the sipe undulates, each sipe also including:
a first (28) and second (30) lower sipe projection extending from an upper sipe portion (26), each of the projections being spaced apart from the other within the tread and extending to a depth within the tread (20), **characterized in that**
the sipe undulates along its length along said sweep axis (A).

2. The tire tread (20) of claim 1, wherein the upper sipe portion (26) extends from an exterior tread contact surface to a final depth within the tread, the first and second extensions extending from the upper sipe portion (26).

3. The tire tread (20) of claim 1, wherein the undulating path is an alternating path.

4. The tire tread (20) of claim 1, wherein the undulating path is a contoured path.

5. The tire tread (20) of claim 1, wherein the undulating path is symmetrical about a lengthwise sweep axis.

6. The tire tread (20) of claim 1, wherein the lengthwise sweep axis (A) is non-linear.

7. The tire tread (20) of claim 1, wherein each of the first and second projections extend to a different depth within the tread.

8. The tire tread (20) of claim 1, wherein the first (28) and second (30) lower projections form a symmetrical cross-sectional shape.

9. The tire tread (20) of claim 1, wherein the first (28) and second (30) lower projections form a "U" or "V" cross-sectional shape.

10. The tire tread (20) of claim 1, wherein the undulating sipe generally forms an inverted "Y" or "h" cross-sectional shape.

11. The tire tread (20) of claim 1, wherein the progressive sipe intersects a groove or second sipe.

12. The tire tread (20) of claim 11, wherein the second sipe includes an upper portion and a lower expanded portion.

13. The tire tread (20) of claim 12, wherein the lower expanded portion comprises a pair of lower projections.

## Patentansprüche

1. Geformte Reifenlauffläche (20), die Folgendes umfasst:
mehrere Laufflächenelemente (22), die durch eine oder mehrere Rillen getrennt sind,
eine oder mehrere gestaffelte Lamellen (24), wobei jede Lamelle eine Schwungachse (A) hat, entlang derer sich die Lamelle wellt, wobei jede Lamelle ebenfalls Folgendes einschließt:
einen ersten (28) und einen zweiten (30) Lamellenvorsprung, der sich von einem oberen Lamellenabschnitt (26) aus erstreckt, wobei jeder der Vorsprünge mit Abstand von dem anderen innerhalb der Lauffläche angeordnet ist und sich bis zu einer Tiefe innerhalb der Lauffläche (20) erstreckt, **dadurch gekennzeichnet, dass**
sich die Lamelle entlang ihrer Länge entlang der Schwungachse (A) wellt.

2. Reifenlauffläche (20) nach Anspruch 1, wobei sich der obere Lamellenabschnitt (26) von einer äußeren Laufflächen-Berührungsfläche bis zu einer abschließenden Tiefe innerhalb der Lauffläche erstreckt, wobei sich die erste und die zweite Erweiterung von dem oberen Lamellenabschnitt (26) aus erstrecken.

3. Reifenlauffläche (20) nach Anspruch 1, wobei die sich wellende Bahn eine abwechselnde Bahn ist.

4. Reifenlauffläche (20) nach Anspruch 1, wobei die sich wellende Bahn eine konturierte Bahn ist.

5. Reifenlauffläche (20) nach Anspruch 1, wobei die sich wellende Bahn um eine längs verlaufende Schwungachse symmetrisch ist.

6. Reifenlauffläche (20) nach Anspruch 1, wobei die längs verlaufende Schwungachse (A) nicht-linear ist.

7. Reifenlauffläche (20) nach Anspruch 1, wobei sich jeder von den ersten und den zweiten Vorsprüngen bis zu einer unterschiedlichen Tiefe innerhalb der Lauffläche erstreckt.

8. Reifenlauffläche (20) nach Anspruch 1, wobei die ersten (28) und die zweiten (30) unteren Vorsprünge eine symmetrische Querschnittsform bilden.

9. Reifenlauffläche (20) nach Anspruch 1, wobei die ersten (28) und die zweiten (30) unteren Vorsprünge eine "U"- oder eine "V"-Querschnittsform bilden.

10. Reifenlauffläche (20) nach Anspruch 1, wobei die sich wellende Lamelle im Allgemeinen eine umgekehrte "Y"- oder eine "h"-Querschnittsform bildet.

11. Reifenlauffläche (20) nach Anspruch 1, wobei die gestaffelte Lamelle eine Rille oder eine zweite Lamelle schneidet.

12. Reifenlauffläche (20) nach Anspruch 11, wobei die zweite Lamelle einen oberen Abschnitt und einen unteren ausgedehnten Abschnitt einschließt.

13. Reifenlauffläche (20) nach Anspruch 12, wobei der untere ausgedehnte Abschnitt ein Paar von unteren Vorsprüngen umfasst.

## Revendications

1. Bande de roulement de pneumatique moulée (20) comprenant :
une pluralité d'éléments de bande de roulement (22) séparés par une ou plusieurs rainure(s) ;
une ou plusieurs incisions progressives (24), chaque incision ayant un axe de balayage (A) le long duquel l'incision ondule, chaque incision comprenant en outre :
une première (28) et une deuxième (30) saillie d'incision inférieure s'étendant depuis une partie d'incision supérieure (26), chacune des saillies étant espacée de l'autre à l'intérieur de la bande de roulement et s'étendant jusqu'à une profondeur à l'intérieur de la bande de roulement (20), **caractérisée en ce que**
l'incision ondule sur sa longueur le long dudit axe de balayage (A).

2. Bande de roulement de pneumatique (20) selon la revendication 1, dans laquelle la partie d'incision supérieure (26) s'étend d'une surface de contact de bande de roulement extérieure à une profondeur finale à l'intérieur de la bande de roulement, les première et deuxième extensions s'étendant depuis la partie d'incision supérieure (26).

3. Bande de roulement de pneumatique (20) selon la revendication 1, dans laquelle le chemin ondulé est un chemin alternatif.

4. Bande de roulement de pneumatique (20) selon la revendication 1, dans laquelle le chemin ondulé est un chemin façonné.

5. Bande de roulement de pneumatique (20) selon la revendication 1, dans laquelle le chemin ondulé est symétrique autour d'un axe de balayage dans le sens de la longueur.

6. Bande de roulement de pneumatique (20) selon la revendication 1, dans laquelle l'axe de balayage dans le sens de la longueur (A) est non linéaire.

7. Bande de roulement de pneumatique (20) selon la revendication 1, dans laquelle chacune des première et deuxième saillies s'étend à une profondeur différente à l'intérieur de la bande de roulement.

8. Bande de roulement de pneumatique (20) selon la revendication 1, dans laquelle les première (28) et deuxième (30) saillies inférieures forment une forme de section transversale symétrique.

9. Bande de roulement de pneumatique (20) selon la revendication 1, dans laquelle les première (28) et deuxième (30) saillies inférieures forment une forme de section transversale en "U" ou en "V".

10. Bande de roulement de pneumatique (20) selon la revendication 1, dans laquelle l'incision ondulée forme de manière générale une forme de section transversale en "Y" inversé ou en "h".

11. Bande de roulement de pneumatique (20) selon la revendication 1, dans laquelle l'incision progressive coupe une rainure ou une deuxième incision.

12. Bande de roulement de pneumatique (20) selon la revendication 11, dans laquelle la deuxième incision comprend une partie supérieure et une partie inférieure expansée.

13. Bande de roulement de pneumatique (20) selon la revendication 12, dans laquelle la partie inférieure expansée comprend une paire de saillies inférieures.
